# EUROPEAN PATENT APPLICATION

(11) **EP 1 976 282 A2**
(43) Date of publication of application: **01.10.2008**
(21) Application number: 08004665.9
(22) Date of filing: 13.03.2008
(51) Int. Cl.: H04N 5/445

(54) **Broadcast receiving apparatus and broadcast reception method**

(30) Priority: 29.03.2007 JP 2007086130
(71) Applicant: Kabushiki Kaisha Toshiba, Minato-ku, Tokyo 105-8001 (JP)
(72) Inventor: Morikawa, Jiro, Tokyo 105-8001 (JP)
(74) Representative: HOFFMANN EITLE

(57) **Abstract**

According to one embodiment, there is provided a broadcast receiving apparatus including a tuner (12) which demodulates a broadcast signal and outputs a demodulation signal, a separator (17) which separates electronic program information from the demodulation signal, and a processing unit (36) which extracts items of program title information and items of program detailed information corresponding to time information and channel information from the electronic program information, and having a first mode (channel mode) and a second mode (detail mode). In the first mode, the processing unit produces an image signal for a display (FIG. 5) showing the items of program title information and showing no program detailed information. In the second mode, the processing unit produces an image signal for a display (FIG. 6) simultaneously showing the program detailed information and items of program title information different from the program title corresponding to the program detailed information.

## Description

One embodiment of the invention relates to a broadcast receiving apparatus and a broadcast reception method for displaying electronic program information on a screen.

By virtue of digital video technologies that have improved in recent years, ground wave digital broadcasting, in particular, is becoming widespread and leading to the utilization of electronic program information. Such electronic program (abbreviated to EPG) information includes program information corresponding to a TV program list as in a newspaper or magazine which is electronically superimposed on a broad cast wave, etc., then isolated from the broadcast wave and displayed on a TV screen or the like.

Patent Document 1 (Jpn. Pat. Appln. KOKAI Publication No. 2002-232804) discloses the following technology. That is, multiplexed program information is extracted, and then program display data is created in which items of program information including the broadcasting times, titles, and detailed information of programs are edited into a single display. Items of information about programs on the same channels or items of program information selected by a user under particular conditions are displayed in temporal series or items of program information currently broadcast are displayed in order of channel.

Such a prior art disclosed in the patent document 1 shows a plurality of titles on a single display, or shows detailed information about each program by switching to another display. However, this technology does not allow the simultaneous display of a list of program titles and program information (e.g., names of actors and actresses, content, etc.) about each program. That is, users cannot simultaneously view the detailed information for each program and other program titles as well, as the case of viewing a TV program list in a newspaper.

It is, accordingly, an object of the invention to provide a broadcast receiving apparatus and a broadcast reception method that make it possible to display electronic program information that allows the simultaneous display of the detailed information of a program on one channel and the titles of programs on other channels.

One embodiment to achieve the above object is a broadcast receiving apparatus comprising:
a tuner (12) which demodulates a broadcast signal and outputs a demodulation signal;
a separator (17) which separates electronic program information from the demodulation signal output from the tuner; and
a processing unit (36) which extracts items of program title information and items of program detailed information corresponding to time information and channel information from the electronic program information supplied by the separator, selects a first mode (title mode) or a second mode (detail mode) different from the first mode, and edits the electronic program information in order to produce in a first mode an image signal for a display (D1 in FIG. 3, FIG. 5) showing the items of program title information and showing no program detailed information and in order to produce in a second mode an image signal for a display (D2 in FIG. 3, FIG. 6) simultaneously showing the program detailed information and items of program title information different from the program title corresponding to the program detailed information.

Thus, for example, displaying the detailed information (e.g., performers) about a TV program between the titles of other programs arranged vertically allows a user to simultaneously view the detailed information about that program as well as the titles of programs on other channels.

The invention can be more fully understood from the following detailed description when taken in conjunction with the accompanying drawings, in which:
FIG. 1 is a block diagram showing an example of a configuration of a broadcast receiving apparatus according to one embodiment of the invention;
FIG. 2 shows an example of a remote controller used with the broadcast receiving apparatus according to this embodiment;
FIG. 3 illustrates examples of a title mode display and detail mode display in a channel mode implemented by the broadcast receiving apparatus according to the present embodiment;
FIG. 4 is a flowchart showing an example of an electronic program display process implemented by the broadcast receiving apparatus according to the present embodiment;
FIG. 5 illustrates a concrete example of a title mode display shown as a result of the electronic program information process implemented by the broadcast receiving apparatus according to the present embodiment;
FIG. 6 illustrates a concrete example of the detail mode display shown as a result of the electronic program information process implemented by the broadcast receiving apparatus according to the present embodiment;
FIG. 7 illustrates a concrete example of the detail mode display after the movement of a highlight in the electronic program information process implemented by the broadcast receiving apparatus according to the present embodiment;
FIG. 8 is a flowchart illustrating an example of a processing of additionally displaying program detailed information in the electronic program information display process implemented by the broadcast receiving apparatus of the present embodiment;
FIG. 9 shows a concrete example of a process of additionally displaying program detailed information in the detail mode display shown as a result of the electronic program information display process implemented by this broadcast receiving apparatus;
FIG. 10 shows a concrete example using a slider bar in the detail mode display shown as a result of the electronic program information display process implemented by the broadcast receiving apparatus according to the present embodiment;
FIG. 11 shows a concrete example of a detail mode display shown as a result of the electronic program information display process implemented by the broadcast receiving apparatus according to the present embodiment;
FIG. 12 is a flowchart illustrating an example of an electronic program information display process in a channel mode or time mode implemented by the broadcast receiving apparatus according to the present embodiment; and
FIG. 13 shows an example of an electronic program information display in the channel mode and that in the time mode implemented by the broadcast receiving apparatus according to the present embodiment.

Referring to the accompanying drawings, an embodiment of the invention will be described in detail.

### <Example of Broadcast receiving apparatus according to One Embodiment of the Invention>

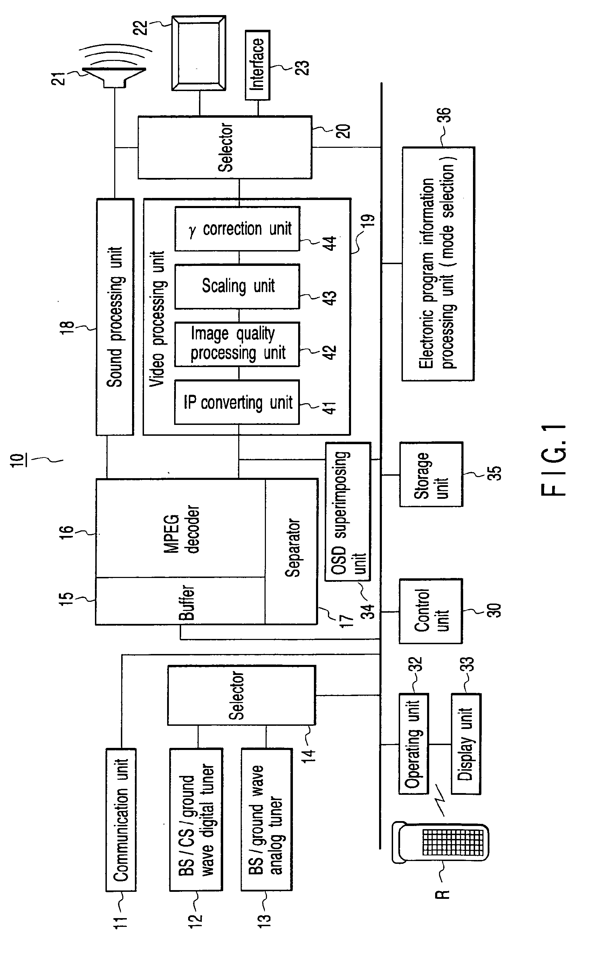

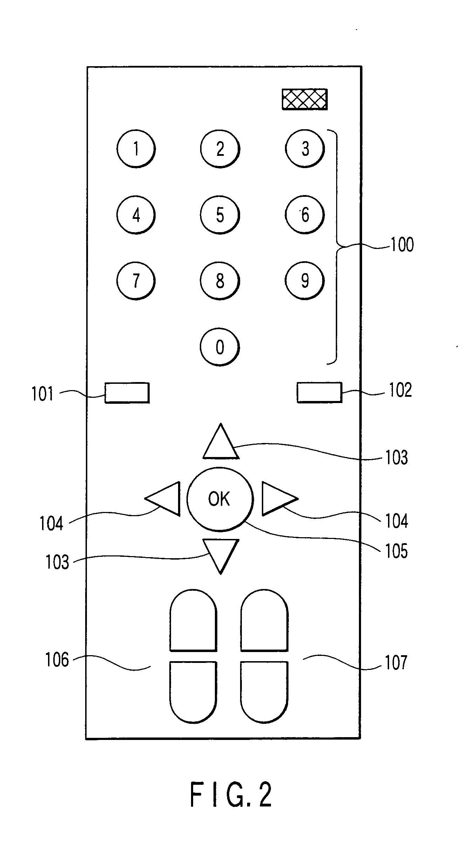

First, an example of a broadcast receiving apparatus according to an embodiment of the invention will be described with reference to the drawings. FIG. 1 is a block diagram showing an example of the continuation of the broadcast receiving apparatus according the one embodiment of the invention. FIG. 2 shows an example of a remote controller used with the broadcast receiving apparatus of the present invention.

### (Configuration of Broadcast receiving apparatus)

Referring to the drawings, an example of the configuration of the broadcast receiving apparatus, such as a digital television, according to one embodiment of the invention will be explained in detail. FIG. 1 is a block diagram showing an example of the continuation of the broadcast receiving apparatus of the present embodiment. The present embodiment is not limited to digital televisions but can also be applied in recording reproducers, such as hard disk recorders, which have the function of receiving ground wave digital broadcast.

A broadcast receiving apparatus 10 is an example of a television apparatus, as shown in FIG. 1, and a control unit 30 is connected to each unit via a data bus in order to control the entire operation. The broadcast receiving apparatus 10 has an input-side selector 14 and an output-side selector 20. Connected to the input-side selector 14 are: a communication unit 11 having functions of mailer, LAN or the like; BS/CS/ground wave digital tuner 12; and BS/ground wave analog tuner 13.

The broadcast receiving apparatus 10 further includes: a buffer 15, a separator 17, a MPED decoder 16, and an OSD (On Screen Display) superimposing unit 34. The buffer 15 temporarily stores a demodulation signal from the BS/ground wave digital tuner 12. The separator 17 separates packets (i.e., stored demodulation signals) into groups according to types. The MPED decoder 16 subjects a video sound signal packet supplied by the separator 17 to an MPEG decoding process, thereby outputting video and sound signals. The OSD superimposing unit 34 superimposes operation information, etc., on the video signal. The broadcast receiving apparatus 10 further includes: a sound processing unit 18, a video processing unit 19, the selector 20, a speaker 21, a display unit 22, and an interface 23. The sound processing unit 18 subjects the sound signal from the MPED decoder 16 to an amplifying process, etc. The video processing unit 19 receives the video signal from the MPEG decoder 16 and OCD superimposing unit 34, and subjects the video signal to a desired video-processing. The selector 20 selects a destination to which the sound signal and video signal are output. The speaker 21 outputs sound according to the sound signal from the sound processing unit 18. The display unit 22 displays a picture according to the video signal produced as a result of the connection to the selector 20 on a liquid crystal display screen or the like. The interface 23 communicates with external devices.

To be specific, the video processing unit 19 has: an IP converting unit 41 which converts an interlace signal into a progressive signal; an image quality processing unit 42 which performs a coring process or an enhancing process; a scaling unit 43 which performs a scaling process; and a γ correction unit 44 which subjects the video signals to a γ correction.

Further, the broadcast receiving apparatus 10 further includes: a storage unit 35 which records, as necessity requires, video information, etc., transmitted from the BS/ground wave analog tuner 13; and an electronic program information processing unit 36 which captures electronic program information from broadcast signals and so on and displays the information on a screen or the like. The storage unit 35 and electronic program information processing unit 36 are connected to the control unit 30 via the data bus. In addition, the broadcast receiving apparatus 10 includes: an operating unit 32 that is connected to the control unit 30 via the data bus to respond to operations input by a user or through a remote controller R; and a display unit 33 that displays operation signals. The remote controller R has a function substantially identical to that of the operating unit 32 of the main body of the broadcast receiving apparatus 10, and allows various settings such as operating a tuner.

The remote controller R includes, as exemplified in FIG. 2, numerical keys 100, first mode selection key 101, second mode selection key 102, EPG vertical keys 103, EPG horizontal keys 104, a mouse key 105, channel keys 106, volume keys 107, etc.

In the broadcast receiving apparatus 10 having such a configuration, a broadcast signal is input from a reception antenna to, for example, the BS/CS/ground wave digital tuner 12, where a channel is selected. Modulation signals in a packet form, acquired by demodulation after the selection, are separated into groups according to packet type by the separator 17. Each sound video packet is decoded into video and sound signals by the MPEG decoder 16, etc., and the video and sound signals are supplied to the sound processing unit 18 and the video processing unit 19. In the video processing unit 19, the supplied video signal is subjected to conversion from an interlace to a progressive signal by the IP converting unit 41, then, subjected to a coring process and enhancement process by the image quality processing unit 42, and then, a scaling process by the scaling unit 43, and γ correction by the γ correction unit 44. Thereafter, this video signal is supplied to the selector 20.

The selector 20 supplies the video signal thus processed to, for example, the display unit 22 according to a control signal transmitted by the control unit 30. Consequently, a picture from the video signal is displayed on the display unit 22. In addition, sound corresponding to the sound signal supplied from the sound processing unit 18 is output from the speaker 21.

In the OSD superimposing unit 34, operation information, electronic program information, etc. are superimposed on a video signal corresponding to a broadcast signal, then the superimposed signals are processed in the video processing unit 19, and an image corresponding to this is shown on the display unit 22.

### <Example of Electronic Program Information Display Process according to One Embodiment of the Invention>

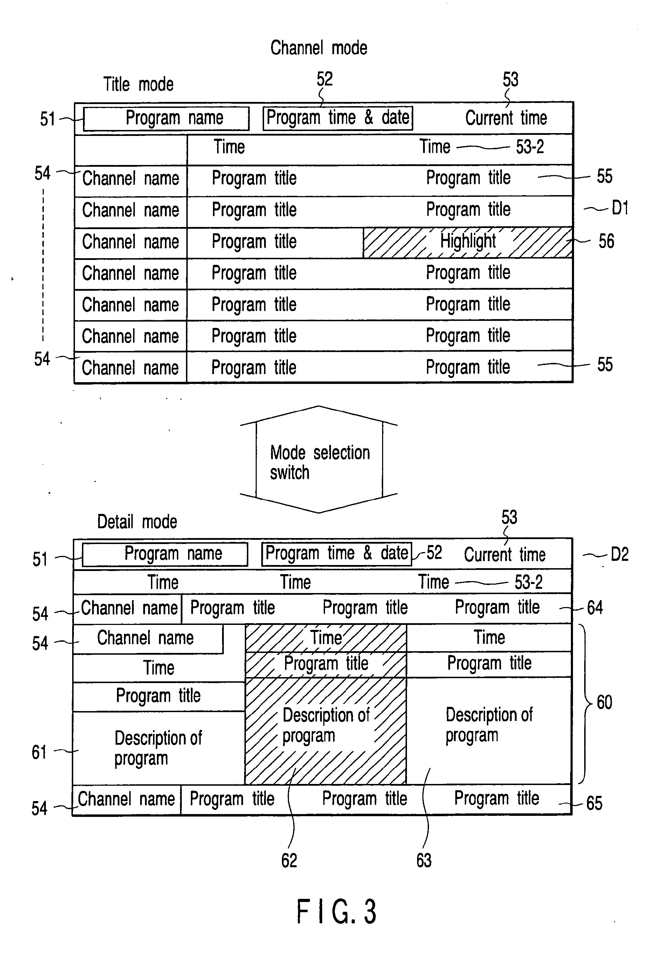

An example of an electronic program information display process implemented by the foregoing broadcast receiving apparatus according to the present embodiment of the invention will be described in detail with reference to the drawings. FIG. 3 is a diagram illustrating an example of a title mode display and detail mode display shown when the broadcast receiving apparatus is in the channel mode.

The electronic program information display process implemented by the broadcast receiving apparatus according to the present embodiment includes, for example, two operation modes: one is a title mode and the other a detail mode.

### (Title Mode display: D1 in FIG. 3)

As shown in FIG. 3, the title mode display D1 shows, for example, a program name 51 corresponding to a highlight 56, program time & date 52, current time & date 53, broadcast time information 53-2, channel names 54, and program titles 55 corresponding to the time information.

The highlight 56 is shown in the display in order to specify one program title. The title specified with the highlight 56 is distinguished from other titles by using, for example, a different color. The position of the highlight 56 can be changed by a user with EPG vertical keys 103, EPG horizontal keys 104, etc., of the remote controller R or the like.

### (Detail Mode display: D2 in FIG. 3)

As shown in FIG. 3, the detail mode display D2 shows, for example, the program name 51 corresponding to the highlight 56, the program time & date 52, current time & date 53, and broadcast time information 53-2.

Displayed in an area 60 is program detailed information corresponding to the highlight 62. Adjacent to the highlight 62 within the same area 60 are program detailed information 61 and program detailed information 63 displayed so as to correspond to channel names 54, broadcast times and program titles.

In addition, for example, displayed vertically adjacent to the area 60 are program titles 64 and 65.

Similarly, the program specified with the highlight 62 is distinguished from other titles by using, for example, a different color. The position of the highlight 62 can be moved by a user with the PEG vertical keys 103, EPG horizontal keys 104, etc., of the remote controller R or the like. This makes it possible also to display the detailed information about the program of each channel adjacent to the highlighted program and the programs before and after the highlighted program.

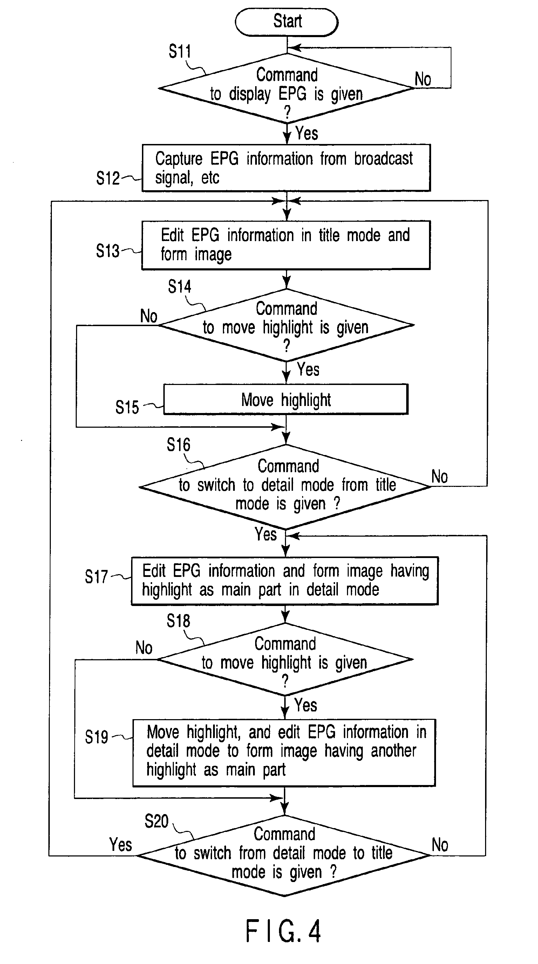

### (Examples of Process of Title Mode and Detail Mode displays: FIGS. 4 to 7)

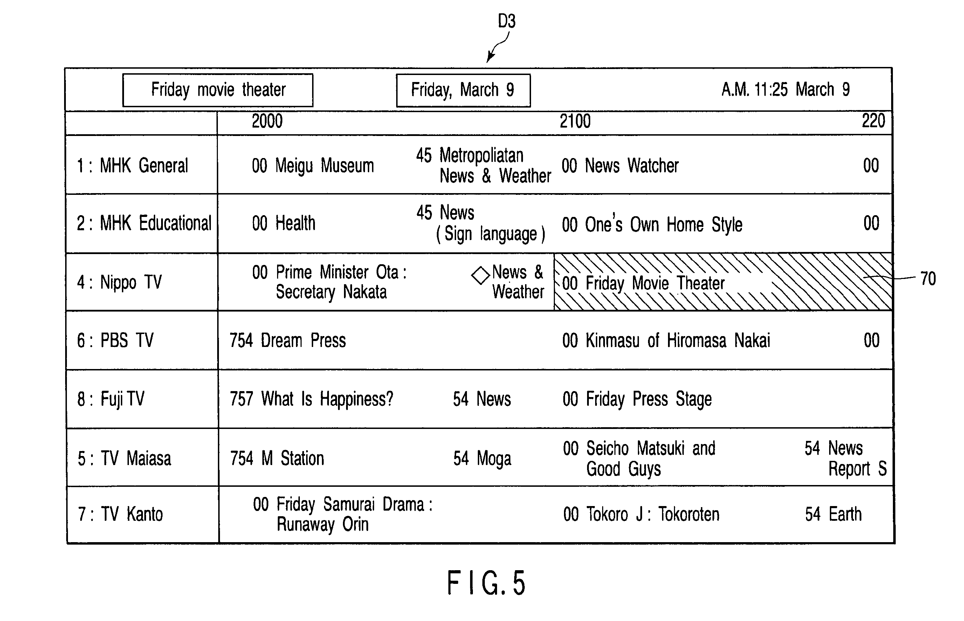

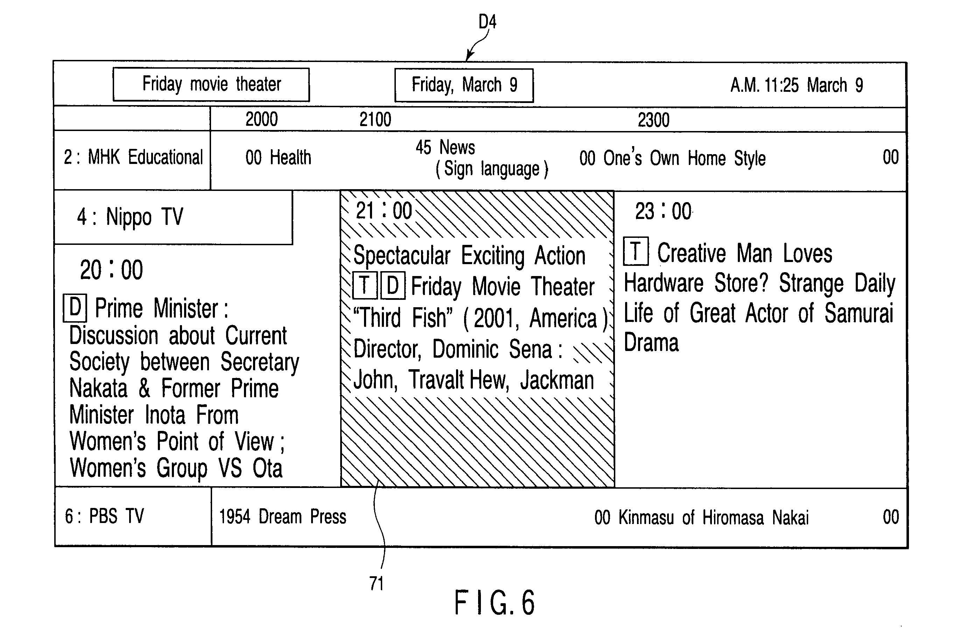

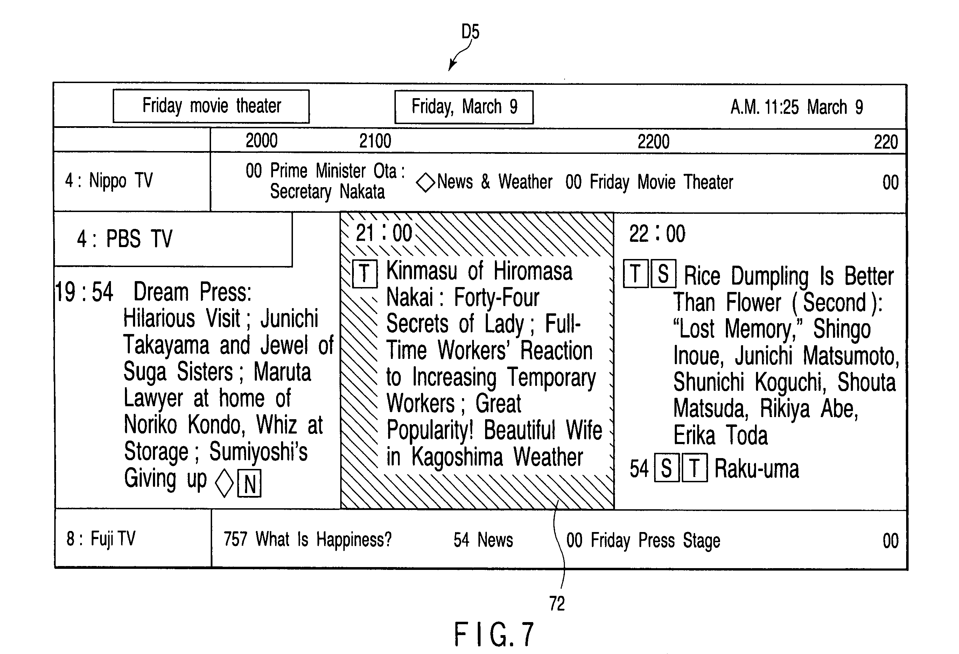

Next, examples of the process of displaying a title mode display and a detail mode display will be described in detail with reference to the drawings. FIG. 4 is a flowchart of one example of the electronic program information display process implemented by the broadcast receiving apparatus according to the present embodiment. FIG. 5 shows a concrete example of the title mode display of electronic program information shown by this broadcast receiving apparatus. FIG. 6 shows a concrete example of the detail mode display of the electronic program information shown by the broadcast receiving apparatus. FIG. 7 shows a concrete example of the detail mode display of the same electronic program information after the highlight is moved.

Incidentally, each step of the flowcharts in FIGS. 4, 8, and 12 can be replaced with and therefore defined by a circuit block.

The broadcast receiving apparatus according to the present embodiment proceeds as shown in the flowchart in FIG. 4. First, under the control of the control unit 30 or electronic program information processing unit 36, a determination is made whether or not an instruction to display electronic program information has been given by the operating unit 32 or remote controller R (step S11). The operation of giving an instruction to display may be performed by any method. For instance, detecting a first depression of the mode switch key 101 in the non-display state of the electronic program information may indicate the instruction to display the electronic program (a second depression may indicate the instruction to switch to the detail mode, which is described below, a third depression, the instruction to delete the display of that electronic program, and so on).

Upon the electronic program information display instruction being detected by the control unit 30 or electronic program information processing unit 36, the BS/CS/ground wave digital tuner 12 or the like captures electronic program information superimposed on a digital broadcast signal (step S12).

Specifically, to capture the electronic program information superimposed on the digital broadcast signal, the BS/CS/ground wave digital tuner 12 selects a specific broadcast signal and decodes it, and supplies a demodulation signal to the separator 17, which isolates the superimposed electronic program information. The isolated electronic information is supplied to the electronic program information processing unit 36 and edited.

In this case, the electronic program information is described in a predetermined EIT (Encoded Information Type) short event descriptor dedicated to various particular information, such as time or program information, program name and program detailed information corresponding to channel information. Accordingly, the electronic program information processing unit 36 can extract program names, program detailed information, etc. according to areas determined in the event descriptor. For example, a program name is described in forty or fewer em-size characters, in the form, event name char.

The electronic program information is not necessarily extracted from a digital broadcast signal received by the BS/CS/ground wave digital tuner 12, but can appropriately be extracted from an analog broadcast signal received by the BS/ground wave analog tuner 13. Further, the electronic program information may be captured from a broadcasting station, etc. by the communication unit 11 via the Internet, and the method of capturing the electronic program information is not limited thereto.

The control unit 30 or electronic program information processing section 36 first displays the title mode display D1, as shown in FIG. 3, by default according to control information, etc., stored in the storage unit 35. Specifically, from the captured electronic program information, the electronic program information processing section 36 extracts various information, such as specified time & date, channel, program name, program detailed information described in the EIT short event descriptor, for example. According to the display required, the electronic program information processing unit 36 edits the channel information, the time information, the program title information, program detailed information, etc., and forms an image (step S13).

The title mode display D3 shown in FIG. 5 is an example of the result of the step 13. In FIG. 5, "Friday Movie Theater" on "Nippo TV" station is specified with highlight 70. This highlight 70 can be vertically or horizontally moved within the program list in the title mode display D3 by operating the EPG vertical keys 103, EPG horizontal keys 104, etc. By moving the highlight 70 beyond the program list, the program list can be scrolled. The highlight 70 may moved appropriately in response to an operation signal input from the mouse key 105.

When the control unit 30 or electronic program information processing unit 36 recognizes a command to move the highlight 70 (step 14), the processing unit 36 produces an image signal based on the electronic program information to which the highlight 70 is to be moved (step S15).

Further, when it recognizes the operation of giving an instruction to switch from the title mode to the detail mode (step S16), the control unit 30 or electronic program information processing unit 36 edits the electronic program information so as to render the highlight 71 as the main item and forms an image in the detail mode display D4, as shown in FIG. 6 (step S17).

The operation of an instruction to switch from the title mode to the detail mode may be performed by any method such as detecting a second depression of the first mode switch key 101 of the remote controller R.

When it further recognizes a command to move the highlight in the detail mode display D4 (step S18), the control unit 30 or electronic program information processing unit 36 moves the highlight as in the case of the title mode display D3, and also scrolls the program information. Then, as shown in the detail mode display D5 in FIG. 7, the unit 30 or 36 edits the electronic program information in the detail mode, rendering the highlight 71 as the main item, and forms an image (step S19).

Consequently, on the detail mode display D5 in FIG. 7, "Friday Movie Theater" corresponding to "Nippo TV" station on channel 4 is changed to "Kinsuma of Hiromasa Nakai" corresponding to "PBS TV" station on channel 6. In addition, the program detailed information displayed adjacent to "Friday Movie Theater" on "Nippo TV" station is changed to that adjacent to "Kinsuma of Hiromasa Nakai" on "PBS TV" station. Also, the program titles adjacent to the highlight are changed so as to display those corresponding to "Nippo TV" station on channel 4 and those corresponding to "Fuji TV" station on channel 8.

In addition, when it recognizes the operation of giving an instruction to switch from the detail mode to the title mode (step S20), the control unit 30 or electronic program information processing unit 36 proceeds to step S13, in which it edits the electronic program information to produce the title mode display D3.

The operation of an instruction to switch to the title mode from the detail mode may be performed by any method, such as detecting a fourth depression of the first mode switch key 101 of the remote controller R.

Thus, the control unit 30 or electronic program information processing unit 36 produces image signals by editing electronic program information to display the title mode display D3 and detail mode display D4 as shown in FIGS. 5 and 6 respectively. Accordingly, the display D3 enables a user to view the program titles of the entire program list, and the detail mode display D4 enables the user to view program detailed information about the specified program, such as principals, while checking other channel programs adjacent to this specified program listed in temporal series.

In the embodiment described above, the display of electronic program information may be switched between the title and detail modes. However, the embodiment may include only the detail mode display D2, in which case, the same effect can be produced such that program detailed information about a specified program and the titles of programs adjacent to this specified program can be simultaneously checked on the single display.

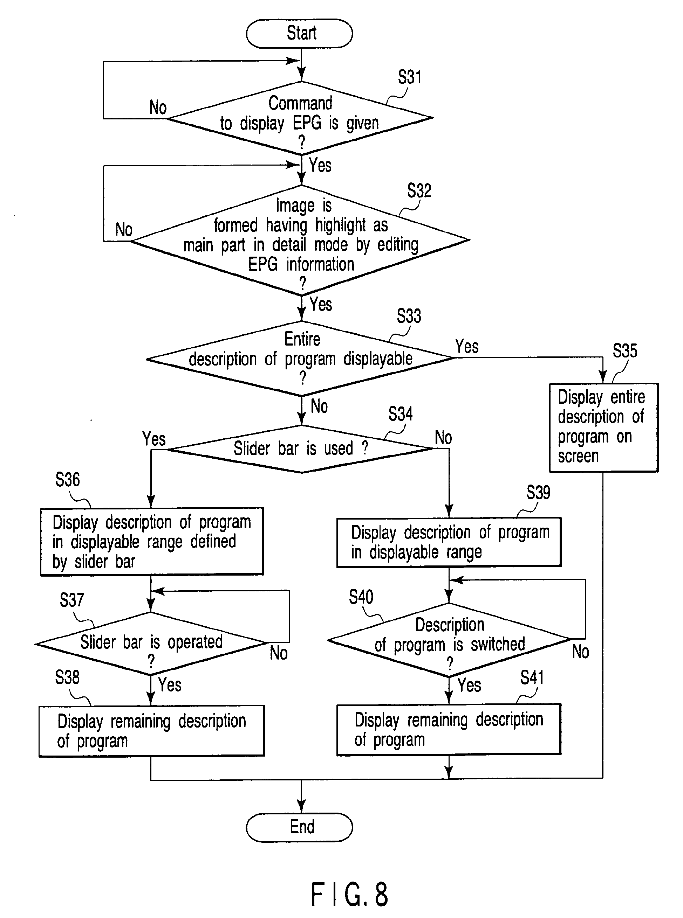

### (Example of Processing of Display of Remaining Information in Detail Mode: FIGS. 8 to 11)

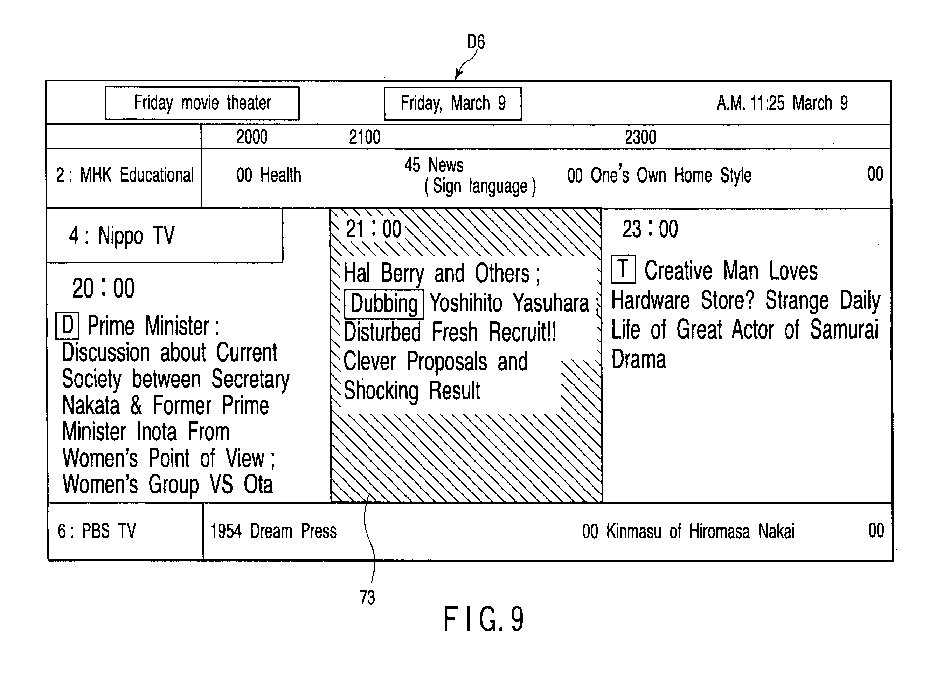

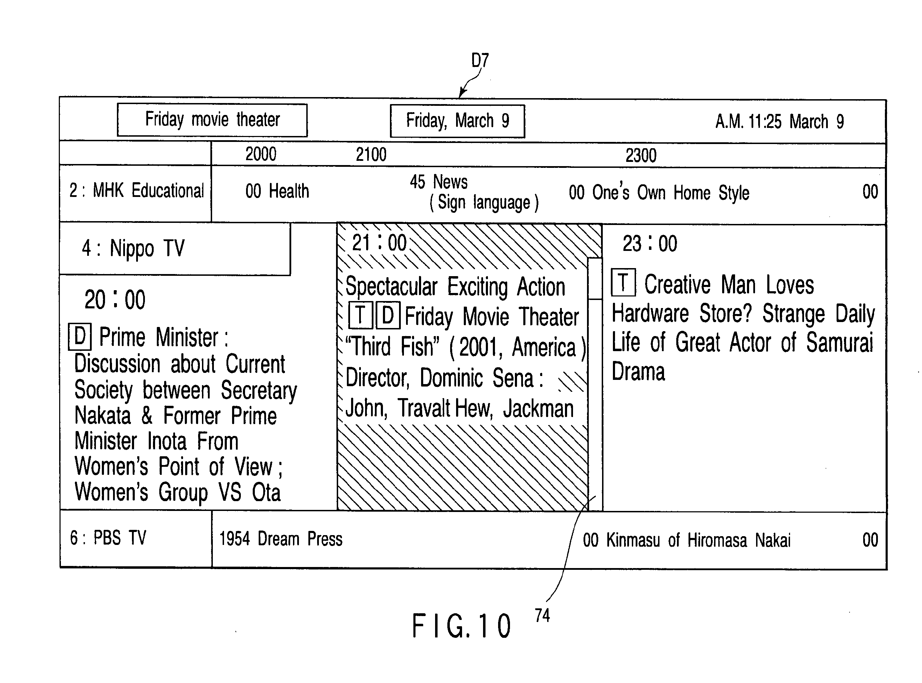

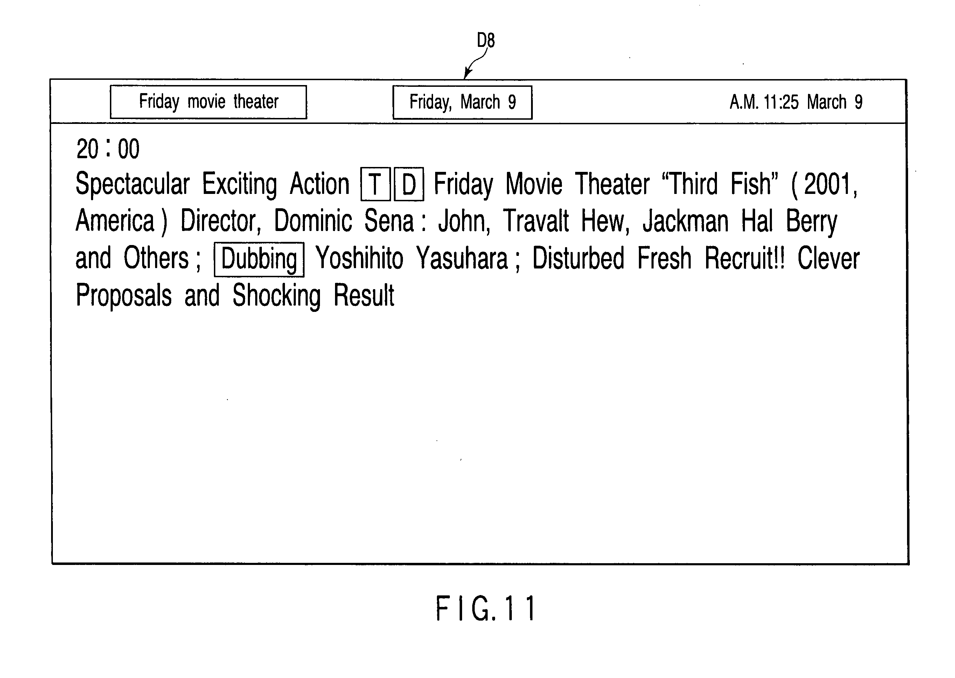

Next, the process of displaying the rest of the program detailed information which was not displayed as in the detail mode display D4 will be described with reference to drawings. FIG. 8 is a flowchart illustrating an example of a process of additionally displaying program detailed information in the electronic program information display process implemented by the broadcast receiving apparatus. FIG. 9 shows a concrete example of a process of additionally displaying program detailed information in the detail mode display shown as a result of the electronic program information display process implemented by this broadcast receiving apparatus. FIG. 10 shows a concrete example of using a slider bar in the detail mode display shown as a result of the electronic program information display process implemented by the broadcast receiving apparatus. FIG. 11 shows a concrete example of a detail mode display shown as a result of the electronic program information display process implemented by the broadcast receiving apparatus.

As shown in the flowchart in FIG. 8, the control unit 30 or electronic program information processing unit 36 responds to the command to display electronic program information (step S31) and shows a display such that the highlight 71 is rendered as the main part, as shown in the detail mode display D4 in FIG. 6 (step S32). During the step S32, the control unit 30 or electronic program information processing unit 36 determines whether or not it is possible to show the entire information in the single display (step S33). If YES, it displays the entire program detailed information as per normal and ends the sub-routine process shown in FIG. 8 (step S35).

However, if it determines that the entire program detailed information cannot be shown in the single display, the control unit 30 or the electronic program processing unit 36 next determines, based on specifications, setting formation, etc., in the storage unit 35, whether to use a slider bar or not (step S34). If it determines that the slider bar should not be used, the unit 30 or 36 shows the program detailed information within the displayable range, as shown by the highlight 71 in the detail mode display D4 in FIG. 6 (step S39).

Subsequently, the unit 30 or 36 determines whether or not an instruction to switch an operation has been given by, for example, the mouse key 105 of the remote controller R or the like in order to display the rest of the program detailed information of the specified program (step S40). If the unit 30 or 36 recognizes the instruction to switch, it produces an image signal according to the corresponding electronic program information in order to show the rest of the program detailed information as shown in the highlight 73 in the detail mode display D6 in FIG. 9 (step S41).

When the control unit 30 or electronic program information processing unit 36 determines to use the slider bar based on, for example, specification, setting information, etc. in the storage unit 35 (step S34), it produces an image signal according to the corresponding electronic program information in order to show the program detailed information within the displayable range defined by the slider bar 74, as shown in the detail mode display D7 in FIG. 10 (step S36). In this case, when the unit 30 or 36 recognizes the slider bar operated by, for example, the mouse key 105 of the remote controller R or the like (step S37), it produces an image signal according to the electronic program information in order to display the rest of the program detailed information, as shown in the highlight 73 in the detail mode display D6 in FIG. 9 (step S38).

Thus, where the entire program detailed information cannot be shown in the single display, taking the foregoing steps makes it possible to display the entire program detailed information in an appropriate manner. For instance, upon recognizing a predetermined number of depressions of the first mode switch key 101 of the remote controller R or the like, the control unit 30 or electronic program information processing unit 36 may produce an image signal according to the electronic program information in order to show only program detailed information corresponding to the highlight in a display D8 exemplified in FIG. 11.

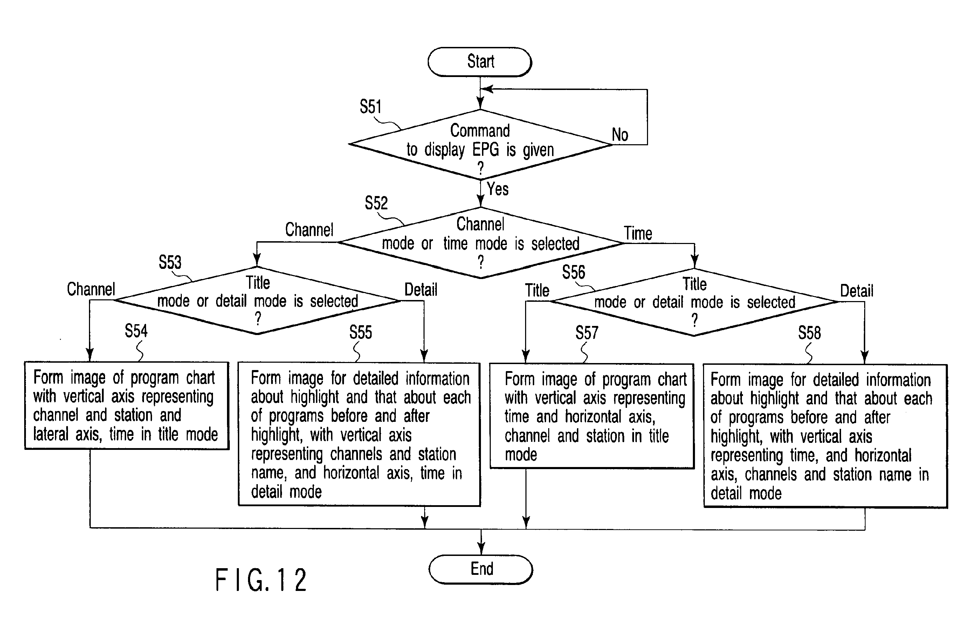

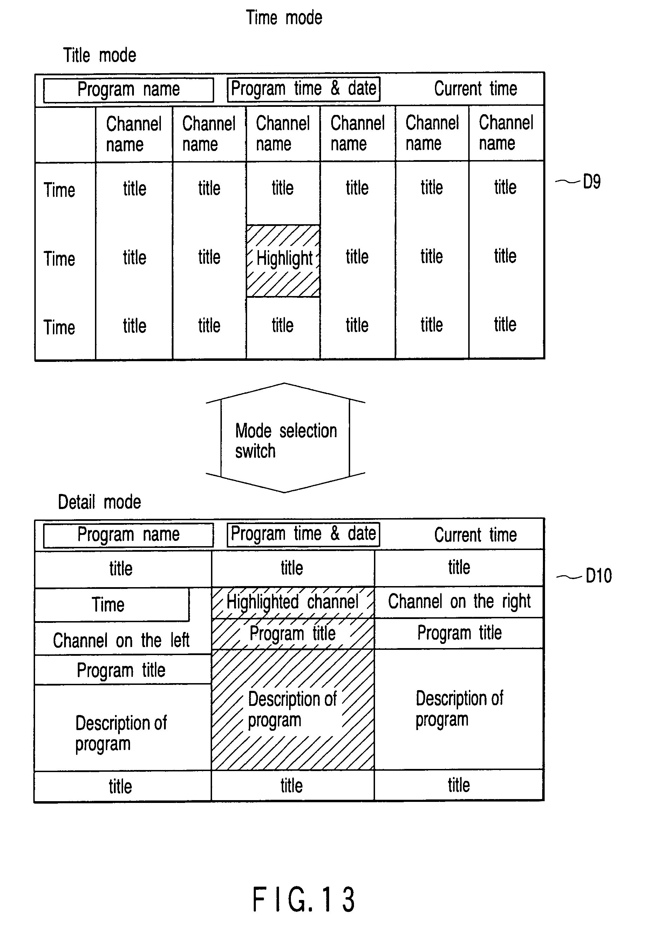

### (Example of Process of Switching between Channel Mode and Time Mode: FIGS. 12 and 13)

An example of the process of switching between the channel mode and the time mode will now be described with reference to the drawings. In the display of electronic program information described above, the vertical axis of the chart as shown in FIG. 3 represents channels and the horizontal axis represents channel mode corresponding to time. This channel mode allows the viewing of detailed information about programs broadcast on the same channel at different times but does not allow the viewing of detailed information about programs broadcast on different channels at the same time.

By contrast, the time mode enables a user to view detailed information about programs broadcast on different channels at the same time, and makes it easier for a user to select a channel.

FIG. 12 is a flowchart showing an example of the process of displaying electronic program information in the channel mode or time mode implemented by the broadcast receiving apparatus according to the present embodiment. FIG. 13 is a diagram illustrating an example of the electronic program information display in channel mode or time mode implemented by the same broadcast receiving apparatus.

For example, as shown in the flowchart in FIG. 12, upon detecting an instruction to display electronic program information (step S51), the control unit 30 or electronic program information processing unit 36 determines, from specification or setting information in the storage 35, whether either the channel mode or time mode has been selected (step S52). In this case, it is convenient to switch from the channel mode to the time mode and vice versa, for example, by depressing the second mode switch key 102 of the remote controller R or the like.

If the unit 30 or 36 determines that the channel mode has been selected, it proceeds to step S53, in which either the detail mode or detail mode has been selected (step S53). If it determines that the title mode has been selected, the unit 30 or 36 forms an image of a chart of program titles such that the vertical axis represents channels and the names of stations, and the horizontal axis, time, as shown in the title mode display D1 in FIG. 3 (step S54).

On the other hand, if the determination is made that the detail mode has been selected, the unit 30 or 36 forms an image for detailed information about the highlight and that about each of programs before and after the highlight such that the vertical axis represents channels and the names of stations and horizontal axis time, as shown in the detail mode display D2 in FIG. 3 (step S55).

If the control unit 30 or electronic program information processing unit 36 determines that the time mode has been selected in step S52, the process proceeds to step 56, in which the unit 30 or 36 determines whether either the detail mode or detail mode has been selected.

If the unit 30 or 36 determines that the title mode has been selected, it forms an image of a chart of program titles such that the vertical axis represents time and the horizontal axis channels and the names of stations, as shown in a title mode display D9 in FIG. 13 (step S57).

If the unit 30 or 36 determines that the detail mode has been selected, it forms an image of detailed information about the highlight and that about each program before and after the highlight such that the vertical axis represents time and horizontal axis time channels and the names of stations, as shown in a detail mode display D10 in FIG. 13 (step S58).

Thus, in the time mode, the detail mode display D10 in FIG. 13 makes it possible to view detailed information about each of different channels broadcasting at the same time. Accordingly, the detail mode display D10 in the time mode makes it easier for a user to select a channel.

While the invention has been described in its preferred embodiment, it is to be understood that ideas for further modifications may occur to those skilled in the art without departing from the spirit of the invention and, therefore, the invention is not limited to the embodiment described above.

## Claims

1. A broadcast receiving apparatus **characterized by** comprising:
a tuner (12) which demodulates a broadcast signal and outputs a demodulation signal;
a separator (17) which separates electronic program information from the demodulation signal output from the tuner; and
a processing unit (36) which extracts items of program title information and items of program detailed information corresponding to time information and channel information from the electronic program information supplied by the separator, selects a first mode (title mode) or a second mode (detail mode) different from the first mode, and edits the electronic program information in order to produce in a first mode an image signal for a display (D1 in FIG. 3, FIG. 5) showing the items of program title information and showing no program detailed information and in order to produce in a second mode an image signal for a display (D2 in FIG. 3, FIG. 6) simultaneously showing the program detailed information and items of program title information different from the program title corresponding to the program detailed information.

2. A broadcast receiving apparatus according to claim 1, **characterized in that**, in the second mode, the processing unit produces an image signal for the display (D2 in FIG. 3, FIG. 6) including a first area, a second area adjacent to the first area, and a third areas adjacent to the second area, wherein the first area shows only the program title information of a first channel, the second area shows the program detailed information of a second channel adjacent to the first channel, and the third area shows only the program title information of a third channel adjacent to the second channel.

3. A broadcast receiving apparatus according to claim 1, **characterized in that**, in the first mode, the processing unit specifies one program title from the plurality of program titles, and in the second mode switched from the first mode, the processing unit produces the image signal for the display (D2 in FIG. 3, FIG. 6) showing the program detailed information about the specified program title.

4. A broadcast receiving apparatus according to claim 1, **characterized in that**, in the second mode, the processing unit displays the program detailed information about the program specified from the items of program title information (FIG. 6), and when an operation signal specifying another program is given, the processing unit produces an image signal for a display (FIG. 7) showing the program detailed information about the program newly specified.

5. A broadcast receiving apparatus according to claim 1, **characterized in that**, when the entire program detailed information about one program cannot be shown in the display in the second mode, the processing unit produces, upon receiving an operation signal, an image signal for a display (FIG. 9) showing the rest of the program detailed information of the program.

6. A broadcast receiving apparatus according to claim 1, **characterized in that**, when the entire program detailed information about one program cannot be displayed in the display in the second mode, the processing unit shows a slider bar as well as the program detailed information (FIG. 10: 74) in the display, and produces, upon receiving an operation signal, an image signal in order to display the rest of the program detailed information about the program.

7. A broadcast receiving apparatus according to claim 1, **characterized in that**, when the processing unit receives another operation signal in a third mode different from the first and second modes, the processing unit produces an image signal for a display (FIG. 10) showing only the program detailed information but showing no program titles on channels other than that corresponding to the program detailed information.

8. A broadcast receiving apparatus according to claim 1, **characterized in that**, according to an operation signal in the first mode and second mode, the processing unit selects a display (FIG. 3: channel mode) in which a vertical axis represents channels and a horizontal axis represents times or a display (FIG. 12: time mode) in which a vertical axis represents times and a horizontal axis represents channels.

9. A broadcast receiving apparatus according to claim 1, **characterized by** further comprising:
a display unit (22) which displays an image on the screen according to an image signal from the processing unit.

10. A broadcast receiving apparatus **characterized by** comprising:
a tuner (12) which demodulates a broadcast signal and outputs a demodulation signal;
a separator (17) which separates electronic program information from the demodulation signal output from the tuner; and
a processing unit (36) which extracts items of program title information and items of program detailed information corresponding to time information and channel information from the electronic program information supplied by the separator, and edits the electronic program information in order to produce an image signal for a display (FIG. 6) showing the program detailed information and items of program title information different from the program title corresponding to the program detailed information.

11. A broadcast reception method **characterized by** comprising:
demodulating a broadcast signal and separating electronic program information from a demodulation signal;
extracting items of program title information and items of program detailed information corresponding to time information and channel information from the electronic program information;
selecting a first mode (title mode) or a second mode (detail mode) different from the first mode; and
editing the electronic program information in order to produce in a first mode an image signal for a display (D1 in FIG. 3, FIG. 5) showing items of program title information and showing no program detailed information and in order to produce in a second mode an image signal for a display (D2 in FIG. 3, FIG. 6) simultaneously showing program detailed information and items of program title information different from the program title corresponding to the program detailed information.
